# EUROPEAN PATENT APPLICATION

(11) **EP 0 654 727 A2**
(43) Date of publication of application: **24.05.1995**
(21) Application number: 94117873.3
(22) Date of filing: 11.11.1994
(51) Int. Cl.: G06F 3/023

(54) **Keyboard incorporating pointing and tilting devices**

(30) Priority: 24.11.1993 US 157822; 30.06.1994 US 268848
(71) Applicant: MICROSOFT CORPORATION, Redmond, Washington 98052-6399 (US)
(72) Inventor: Kaneko, Steven T., Seattle, Washington 98103 (US); Davies, Thomas E., Jr., Snohomishi, Washington 98290 (US); Paull, Mike M., Seattle, Washington 98103 (US); Adams, Edie, Seattle, Washington 98101 (US)
(74) Representative: Grünecker, Kinkeldey, Stockmair & Schwanhäusser Anwaltssozietät

(57) **Abstract**

A keyboard is split into left and right key banks. The key banks are separated by a key bank split angle preferably within the range of 20° to 36°. The key bank split angle opens towards the front of the keyboard, forming an intermediate wedge-shaped area from which an optional integrated trackball projects. The left and right key banks slope upwardly toward each other from the left and right sides of the keyboard, respectively, forming lateral angles preferably within the range of 8° and 15°. The left and right key banks are tilted toward the front side of the keyboard at a tilt angle preferably within the range of 5° and 18°. A palm support extends outwardly from and along the entire front edge of the keyboard. An elongated support is longitudinally retained at the bottom surface of the keyboard, proximate to the front side. The elongated support may be pivoted downward, toward the front side of the keyboard, from a retracted position, to an extended position, to thereby produce a declination angle that changes the tilt angle to a neutral or a negative value.

## Description

### Cross-Reference to Related Application

This application is a continuation-in-part of U.S. Patent Application Serial No. 08/157,822, filed November 24, 1993.

### Technical Field

The present invention generally relates to input devices for computers, and more specifically, to keyboards.

### Background of the Invention

Keyboards are used as input devices for computers, word processors, and various other systems requiring alphanumeric input by a user. Most keyboards are arranged with four rows of keys in the standard "QWERTY" layout used in the first typewriters: a home row consisting of keys A, S, D, F, G, H, J, K, L and ";"; an upper row consisting of keys Q, W, E, R, T, Y, U, I, O and P; a lower row consisting of keys Z, X, C, V, B, N, M, "," and "."; and a numeric row above the upper row, consisting of keys 1 through 0. A space bar is positioned below the lower row.

Additional keys have been added to the standard QWERTY typewriter layout as a result of computers. For example, function keys have been added above the numeric key row or to the left of the standard layout. Edit, cursor movement, and other special keys have been added and located, as a set of keys or key bank, to the right of the standard four key rows. Furthermore, a numeric keypad has been added to the right of the special keypad. The numeric keys include the standard 0 through 9 keys, with standard arithmetic function keys (e.g., +,-, etc.).

In the standard geometric layout, the keys are often staggered in each row rather than being aligned in columns, such that, for example, the "B" key in the bottom row is positioned between the "G" and "H" keys in the home row. The keys are in a plane parallel to the work surface upon which the keyboard rests or are slightly inclined towards the typist.

Most keyboard users or typists assume a typical posture when using the standard keyboard layout for tasks such as word processing and data entry. These typists conventionally maintain their hands over the home row of keys, keeping their forearms horizontal at the keyboard height, with their palms horizontal and parallel to the plane of the keys.

In this posture, typists suffer from the following strains: (1) extension or flexion of the arms and hands to reach the keys, as measured by the angle of hand and wrists, possibly resulting in pressure or increased stress on the tendons and nerves through the carpal tunnel of the wrist; (2) pronation of the forearms to keep the palms facing downward, parallel to the keys; and (3) static loads on the forearms, upper arms and back, possibly causing muscle fatigue when the hands are held over the keys for long periods. Due to the narrow width of the keyboard relative to the standard shoulder width of most typists shoulder adduction and wrist ulnar deviation, as measured by the angle of the long bones of the hand to the bones of the forearm, are other possible strains. Typists attempt to reduce muscle fatigue by lifting their elbows, which, however, then may cause strain in the shoulder and upper back muscle groups.

Consequently, one of the most important goals of keyboard design is to reduce typists' fatigue and the risks of the above physical problems, thereby increasing productivity. Keyboards should be designed to minimize the number and angular range of wrist movements performed in a repetitive cycle. The keyboard should minimize ulnar and radial deviations of the wrist. The keyboard should accommodate a wide variety of postures, allowing users to vary their posture during typing. It should minimize hand extensions and the effects of pronation (i.e., the palm horizontal to the work surface). Overall, a relaxed, neutral hand position should be encouraged. A hand is in a neutral position when positioned in a "hand shake-like" posture.

One keyboard, known as the MINIERGO, manufactured by Marquardt of Cazenoria, N.Y., attempts to alleviate some of the above problems. The MINIERGO splits the standard keyboard in half between the keys 6 and 7 in the numeric row, T and Y in the upper row, G and H in the home row, and B and N in the bottom row. The split creates a left key bank and a right key bank with a wedge-shaped area between the key banks opened towards the user.

Although the geometric layout of standard keyboards may contribute to the above physical problems, the standard positioning of the keys may also possibly produce muscle, tendon and nerve strain in a user. The QWERTY keyboard layout is the *de facto* standard. For English-language word processing tasks, this layout requires: (1) an uneven use of the left and right hands, with the left hand activating more keystrokes than the right, and (2) more use of keys above the home row than below the home row. Reaching keys in the upper row may produce more strain than reaching down to keys in the bottom row.

Several keyboards have attempted to alleviate some of the potential physical strains noted above by rearranging the key layout from the QWERTY standard. However, these rearrangements have generally been rejected because most typists are psychologically predisposed to the QWERTY layout. Additionally, most typists are initially taught on QWERTY keyboards; costs exist to re-educate these typists.

Other keyboards have been designed which attempt to alleviate physical strain on a user. However, these prior keyboards have unacceptable performance learning curves. Additionally, these prior keyboards either fail to sufficiently reduce strain, or provide a keyboard which is unattractive in most business settings. For example, the standard keyboard may be modified slightly to provide a keyboard which is still attractive and appropriate for most conservative business decor. However, these keyboards do not provide enough physical strain relief to typists. Alternatively, prior keyboards have been designed which apparently ergonomically match a user's neutral hand and arm positions. These keyboards are, however, often aesthetically different from standard keyboards. Typists familiar with standard keyboards are averse to these unusual keyboards due to psychological barriers and a predisposition toward the standard geometric layout. These keyboards are often inappropriate for most conservative business settings because they do not aesthetically match standard business furniture, and attract unwanted attention due to their appearance. Additionally, these unusual keyboard designs, if adjustable, are too difficult to adjust by the average user.

Therefore, there is need for a keyboard which reduces the physiological strain keyboard typists experience when using standard keyboards, while still maintaining a semblance of the standard keyboard design.

Recently, additional computer input devices have been introduced to allow a user to input command signals to a computer. These input devices include pointing devices, such as mice, trackballs, pen and tablets, and so forth. These input devices are typically separate units from the keyboard. Typists must remove one of their hands from the keyboard to operate these input devices.

In software applications supporting use of a pointing device, such as applications based on the WINDOWS™ operating system, manufactured by Microsoft Corporation, typists must frequently remove their hands from the keyboard to access the pointing device.

One keyboard, known as the TRON TK1, designed by The Real Time Operating System Nucleus ("TRON") Association, apparently attempts to integrate a pen and tablet into a keyboard having split key banks, as in the MINIERGO™. However, typists must remove one of their hands from the keys to operate the pen and tablet. The POWERBOOK™ computer, manufactured by Apple Corporation, incorporates a trackball into the device. The trackball is positioned within an area between the keyboard and the user. This location for the trackball, however, requires use of a user's thumb on its side, and has been shown to be ineffective, particularly in tasks requiring accurate cursor movements. Alternatively, typists must remove their hands from the keys to access this trackball.

Therefore, there is a need for a computer input device providing the benefits of both a keyboard and a pointing device, and allowing typists to operate both while maintaining their hands over the keys.

### Summary of the Invention

The present invention solves these and other problems of the prior art by incorporating a trackball into a ergonomically designed keyboard. The keyboard of the present invention has left and right key banks. The key banks are separated by a key bank split angle opening toward the front surface of the keyboard, forming a wedge-shaped area. The left and right key banks slope upwardly toward each other from the left and right sides of the keyboard, respectively, forming lateral angles. The left and right key banks are tilted toward the front side of the keyboard at a tilt angle. The key bank's split angle, first and second lateral angles and tilt angle are all fixed angles optimally determined based on ergonomic criteria.

An optional trackball extends upwardly from the wedge-shaped area, between the left and right key banks. Input buttons are located above and below the trackball, within the wedge-shaped area. Typists may use the trackball without removing their hands from the keyboard, and may use either their left or right hand.

A palm support extends outwardly from and along the entire front edge of the keyboard. A separate numeric keypad may be provided. The keys in the left and right key banks, and on the numeric keypad, are arranged in a slightly concave pattern, dished out along both the longitudinal and transverse axes.

The present invention also embodies a keyboard for entering commands into a computer or other device, the keyboard being capable of resting on a surface. The keyboard includes a housing supporting a plurality of keys and having a bottom side, the bottom side having front and rear portions. The keyboard also includes and at least one supporting member retained by the housing at a position proximate to the front portion. The supporting member is movable from a first position where the bottom side is approximately parallel to the surface when resting thereon, to a second position where the supporting member protrudes from the bottom side so that the keyboard declines away from a user at a declination angle. The declination angle slopes downward from the front portion to the rear portion when the keyboard rests on the surface.

Overall, the present invention provides an ergonomically optimal keyboard which provides: (1) a physical geometry alleviating the tendency of a typist to assume a poor posture, (2) improved typing performance as measured by learning time, typing speed and error rates, and (3) visual and psychological appeal such that the keyboard is appropriate in a business setting. The present invention provides a keyboard having effective angles and geometry which minimize the effects of learning so that productivity is maximized and possible biomechanical loads and physical strains minimized. Furthermore, the present invention provides a product appearance which is suitable to a wide variety of business settings.

Other features and associated advantages of the present invention will become apparent from studying the following detailed description of the presently preferred exemplary embodiments, together with the following drawings.

### Brief Description of the Drawings

Figure 1 is an isometric front view of a first embodiment of a keyboard of the present invention.

Figure 2 is a top view of the first embodiment of Figure 1.

Figure 3 is a front view of the first embodiment of Figure 1.

Figure 4 is a bottom view of the first embodiment of Figure 1.

Figure 5 is a rear view of the first embodiment of Figure 1.

Figure 6 is a left side view of the first embodiment of Figure 1.

Figure 7 is a right side view of the first embodiment of Figure 1.

Figure 8 is an isometric front view of a first alternative embodiment of the present invention.

Figure 9 is a top view of the first alternative embodiment of Figure 8.

Figure 10 is a front view of the first alternative embodiment of Figure 8.

Figure 11 is a bottom view of the first alternative embodiment of Figure 8.

Figure 12 is a rear view of the first embodiment of Figure 8.

Figure 13 is a left side view of the first embodiment of Figure 8.

Figure 14 is a right side view of the first alternative embodiment of Figure 8.

Figure 15A is a schematic layout of the keyboard of the present invention.

Figure 15B is a cross-sectional view, taken along the line 15B-15B of Figure 15A.

Figure 15C is a cross-sectional view, taken along the line 15C-15C of Figure 15A.

Figure 16 is a graph showing the force per travel distance of the activation of a key.

Figure 17 is a top view of a second alternative embodiment of the present invention.

Figure 18 is an exploded isometric bottom view of the second alternative embodiment of Figure 17.

Figure 19 is an exploded isometric top view showing a lower housing of the second alternative embodiment of Figure 17.

Figure 20 is an isometric bottom views of the second alternative embodiment of Figure 17 showing a tilting device retracted.

Figure 21 is an isometric bottom view of the second alternative embodiment of Figure 17 showing the tilting device extended.

Figure 22 is an isometric bottom view of the lower housing of Figure 19.

Figure 23 is a top plan view of the lower housing of Figure 19.

Figures 24A, 25A, 26A and 27A are enlarged cross-sectional views of the second alternative embodiment showing the tilting device retracted, taken substantially through lines 24-24, 25-25, 26-26 and 27-27, respectively, of Figure 23.

Figures 24B, 25B, 26B and 27B are enlarged cross-sectional views of the second alternative embodiment showing the tilting device extended, taken substantially through lines 24-24, 25-25, 26-26 and 27-27, respectively, of Figure 23.

Figure 28 is a left side view of the second alternative embodiment of Figure 17.

Figure 29 is a right side view of the second alternative embodiment of Figure 17.

Figure 30 is an exploded isometric bottom view of a third alternative embodiment of the present invention.

### Detailed Description of a Presently Preferred Embodiment

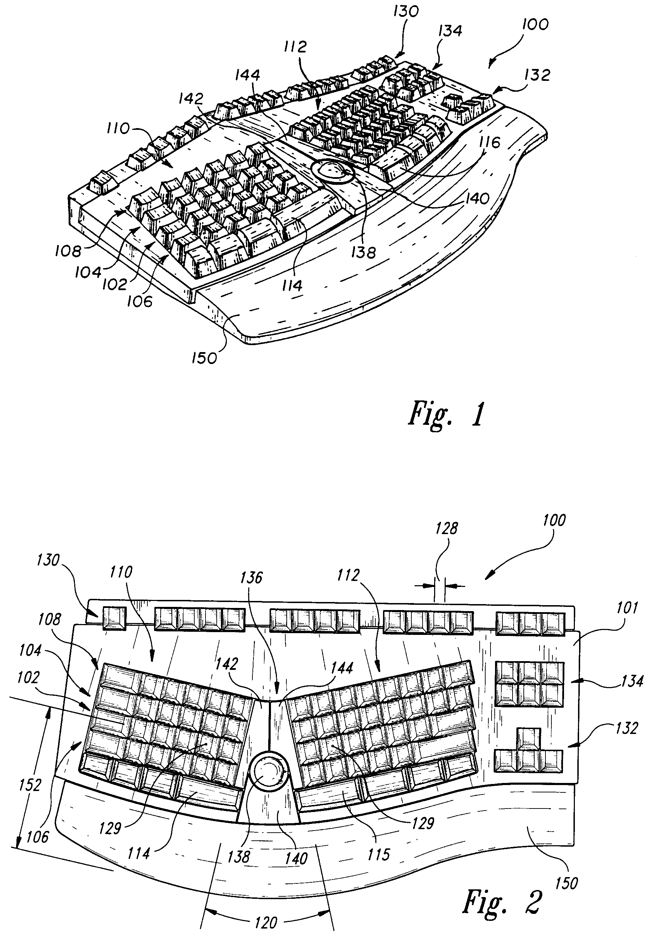

Figures 1-7 show a keyboard device 100 incorporating a trackball according to the present invention. As discussed more fully below, the keyboard of the present invention is defined by various angles and features which have been found to provide ergonomic benefits and may decrease the risks of the above physical problems. The keyboard 100 has an upper housing 101, and a lower housing 103, basically forming top, front, bottom, rear, left and right sides of the keyboard (shown in Figures 2-7, respectively). A bottom side 103' of keyboard 100 forms a plane substantially parallel to a work surface upon which the keyboard may be placed. The keyboard has a home row of keys 102, an upper row of keys 104, a lower row of keys 106, and a numeric row of keys 108. The positioning of these key rows is defined by three primary angles: a key bank split, a lateral slope, and a front-to-back inclination. Each angle will be addressed separately below.

The keyboard 100 is split perpendicular to the rows of keys to form a left key bank 110 and a right key bank 112. The keys are preferably split such that the right key bank 112 has a slightly greater number of keys than the left key bank 110. The right hand is generally stronger than the left hand, and therefore, should perform a greater number of tasks than the left hand. Having more keys in the right key bank 112 will cause the right hand to perform a greater number of tasks than the left hand.

The standard QWERTY key layout is preferred for English language tasks, although other key layouts known by those skilled in the art may be used. Using the detailed description provided herein, the present invention may be readily modified for most international language tasks by, e.g., altering the labeling of each key and adding or subtracting the total number of keys used. Using the QWERTY layout in the present invention, the keys are split between the following keys: in the home row 102, between keys "G" and "H"; in the upper row 104, between keys "T" and "Y"; in the lower row 106, between keys "B" and "N"; and in the numeric row 108, between keys "5" and "6". The left and right key banks are split and diverge to form an intermediate wedge-shaped area opening toward the front of the keyboard 100. Thus, the keys "5" and "6" in the numeric row 112 are closer to each other than the "B" and "N" keys in the lower row 110.

The left and right key banks 110 and 112 have a left spacebar 114 and a right space bar 116, respectively, positioned below the bottom row 106. The split between left key bank 110 and the right key bank 112 forms a key bank split angle 120 opening towards the front of the keyboard 100.

Experimentation has shown that the key bank split angle 120 is optimal between the range of 25° and 36°. A split greater than 36° hampers non-touch or "hunt-and-peck" typists who must look at the keys. A split of less than approximately 20° fails to provide sufficient ergonomic benefits, such as reducing potential fatigue and providing greater comfort. Further studies have shown that most typists prefer the key bank split angle 120 to be between 20° and 25°. Therefore, the key bank split angle 120 is preferably within the range of 20° to 36°, more preferably between 23° and 27°, and most preferably, substantially at 25°.

The key bank split effectively increases the width of the keyboard to more closely align the positioning of a typist's hands on the keyboard with a neutral, relaxed posture of the typist's shoulders. The average shoulder width of most typists is between 29.2 and 37.1 cm. The width of a standard 101 key QWERTY keyboard is 27.9 cm, measured across the home row keys. With a key bank split angle 120 of 25°, the keyboard 100 increases this width to 33 cm, measured across the home row 102.

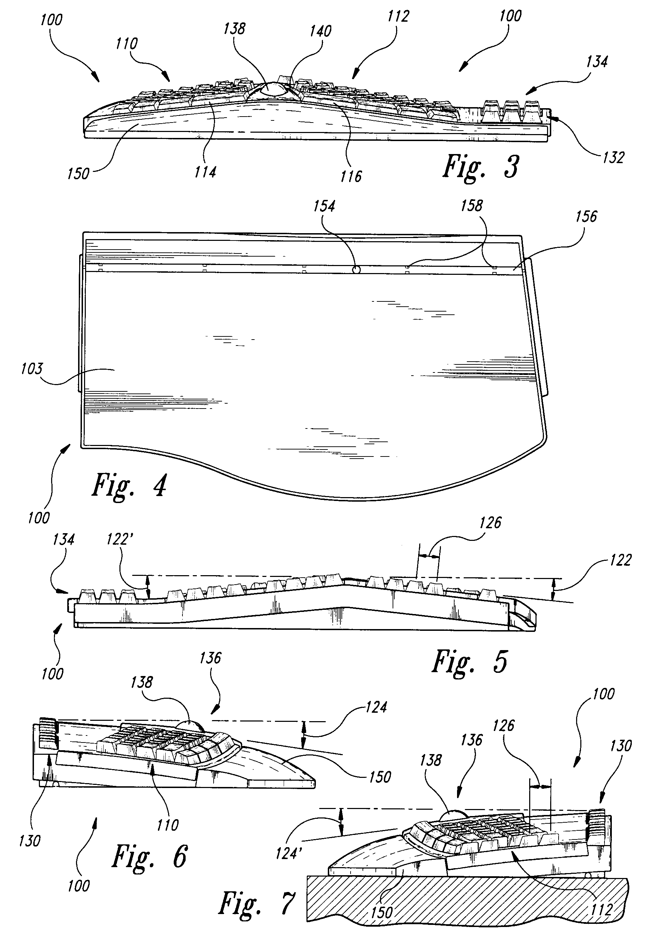

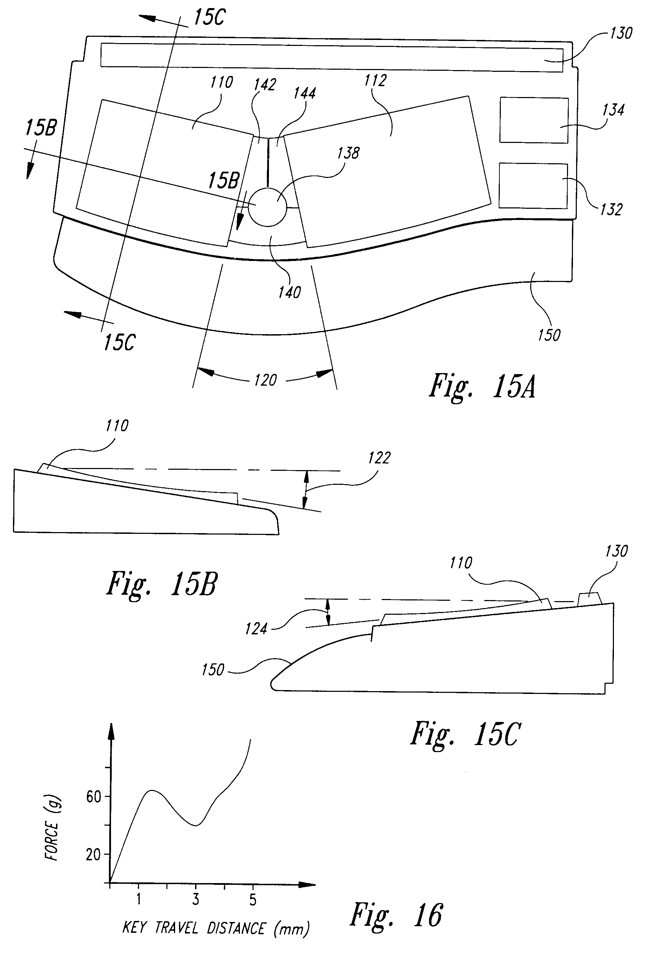

The left and right key banks are sloped upwardly towards each other to form a lateral or gable slope angle with respect to the plane of the bottom of the keyboard 100. The left key bank 110 slopes upwardly from the left side of the keyboard 100 toward a center line between the key banks, forming a lateral slope angle 122. Similarly, the right key bank 112 slopes upwardly from the right side of the keyboard 100 to the center line, forming a lateral slope angle 122' (shown in Figures 5 and 15B).

Experimentation has shown that this lateral slope angle is optimal between the range of 8° and 15°. This slope angle relieves over-pronation of the hands, allowing a more neutral hand posture. Strain caused by pronation was found at a slope less than 8°. A lateral slope of greater than 15° obscured the keys, making typing difficult for non-touch typists. Additionally, too great of a slope creates a keyboard having a higher, more pyramid shaped profile, making the keyboard less attractive in most business settings. The lateral slope angles 122 and 122' are preferably within the range of 8° and 10°, and most preferably, at substantially 8°.

The left key bank 110 is angled upwardly or tilted from the front of the keyboard 100 to the back, forming a front-to-back inclination angle 124 (shown in Figure 6 and Figure 15C). Similarly, the right key bank 112 is upwardly inclined from the front of the keyboard 100 to the rear at a front-to-back inclination angle 124' (shown in Figure 7). This front-to-back inclination reduces extension of the typists fingers when reaching the number row keys 108.

Experimentation has shown that the front-to-back inclination angles 124 and 124' are optimal between the range of 5° and 18°. A slope of less than 5° causes most typists with average-sized hands to overextend their fingers to reach upper keys, thus reducing the ergonomic benefit of this inclination. A front-to-back inclination angle of greater than 18° hampers typists' ability to reach the upper and numeric rows 104 and 108 because they must reach both upwardly and outwardly, possibly creating additional strain.

The keys in the home row 102, the upper row 104, the lower row 106, and the numeric row 108 are aligned in vertical columns in both the left key bank 110 and the right key bank 112. This columnar arrangement of keys between key rows corresponds to the natural movement path of the fingers over the transverse or back-to-front distance of the keyboard. Typists may more easily reach keys in the upper and numeric rows 104 and 108, or in the lower row 106 when the keys are vertically arranged in columns.

In an alternative embodiment (not shown), the keys are staggered between rows, as is currently standard among most QWERTY keyboards. Most touch typists are trained on keyboards having a staggered key layout. By using the standard staggered key layout in the present invention, a touch typist will make fewer errors and need not relearn new key locations.

The keys in the left and right key banks 110 and 112 are preferably arranged in a slightly concave pattern, dished out along both the longitudinal and transverse axis of each key bank (shown, e.g., in Figures 3, 15B and 15C). For the left key bank 110, each key in home row 102 is raised slightly higher than its neighboring key as the keys are longitudinally arranged from the left side of the keyboard 100 to the center line. The keys are similarly raised from the left side of the keyboard to the center line in the upper rows 104, lower row 106, and numeric row 108. Along the transverse axis, the keys in the upper row 104 are each slightly raised higher than those in the home row 102, and likewise, the keys in the numeric row 108 are raised slightly higher than the keys in the upper row 104. The keys in the right key bank 112 are similarly arranged such that the keys in each row rise slightly from the right side of the keyboard to the center line, and from the home row 102 toward the numeric row 108.

This key bank curvature allows a typist's fingers to maintain a more relaxed, curved posture. The key bank curvature helps compensate for the short length of the human pinkie finger and its inherent limited range. Too much key bank curvature hampers a typists ability to reach the leftmost keys in the key bank 110 or rightmost keys in the key bank 112.

The keys in each key bank are spaced, both horizontally and vertically, from each other by a key distance 126 (shown, e.g., in Figures 5 and 7). The key distance is preferably a range of 18-20 mm, measured from the center of each key. Typists with large fingers prefer a greater key distance to accommodate their larger fingers, otherwise, their finger movements feel cramped. In using a keyboard design for typists with large fingers, typists with small fingers must move their fingers more to reach the keys. Experimentation has found that this range of 18-20 mm provides an optimal accommodation between typists having large fingers and the amount of finger movements required for typists having smaller fingers.

The top of each key preferably has a concave contour (shown, e.g., in Figures 1 and 3). The radius of curvature of each key top is preferably within the range of 25-40 mm. This contour cradles the fingertips during keystrokes. As shown best in Figure 3, the rear edge of the key top is preferably raised slightly higher than the front edge to help orient the fingers on the keys.

Each key top has a key top width 128. The key top width 128 is preferably within the range of 12-15 mm, measured across the narrowest dimension. The key tops should be large enough to accommodate the range of fingertip sizes of most typists. Small projections or key bumps 129, approximately 1 mm in diameter, are preferably provided on the key tops of the "F" and "J" keys of the home row 102. These key bumps 129 provide tactile feedback for typists to locate their hands on the home row 102.

The keys are preferably designed to be activated with a force between 40 and 75 grams. If the key can be activated by a force less than 40 grams, the likelihood of inadvertent activation of a key increases. If a force greater than 75 grams is required, the increased muscle exertion will lead to fatigue and strain, and decreased typing speed. Experimentation has shown that a preferable force per travel distance of the key is a double-peaked curve with an initial build-up of force of approximately 60 grams with a sharp drop at switch closure of about 40 grams (shown in Figure 16). The force increases again with over travel of the key.

The double-peaked force per travel distance curve provides tactile feedback, assuring a typist that a key has been activated. Preferably, activation of each key additionally results in auditory feedback. Such auditory feedback may be caused by the key contacting the upper housing 101, or may be provided through software and a speaker provided in the computer. The auditory feedback is preferably queued to the down stroke of the key rather than the upstroke. Auditory feedback has been shown to be helpful for novice typists.

The maximum travel or displacement of the keys is preferably of 2-5 mm. More preferably, the displacement of each key is 3-4 mm. A displacement of less than 2 mm fails to provide adequate feedback to a user that a key has been activated. A displacement of greater than 5 mm may require increased muscle exertion possibly leading to fatigue and strain, and decreased typing speed.

The keyboard 100 preferably includes a row of function keys 130 provided substantially along the rear-most edge of the top surface, behind the key banks 110 and 112. Cursor movement keys 132 are preferably provided to the right of right key bank 112. Special keys 134 are preferably provided to the right of the right key bank 112 behind the cursor movement keys 132. The function keys 130, the cursor movement keys 132 and the special function keys 134 may be labeled with any text or symbols appropriate for keyboards, as is known by those skilled in the art; preferably, these keys have standard labels commonly found on most English language computer keyboards. The function keys 130, the cursor movement keys 132, and the special keys 134 preferably have the same spacing, key top contour, size, travel, activation force and feedback as discussed above for the keys in the left and right key banks 110 and 112, respectively.

The keyboard 100 includes an integrated pointing device 136, preferably a trackball-type pointing device. The pointing device 136 includes a ball 138, a large primary input button 140, and secondary input buttons 142 and 144. Associated circuitry (not shown) to provide input signals to a computer is provided within the housing of the keyboard 100. The pointing device 136 is positioned between the left key bank 110 and the right key bank 112, within the wedge-shaped area defined by key bank split angle 120. The ball 138 is preferably centered between the keybanks and located between the upper row of keys 104 and the space bars 114 and 116, proximate to or slightly below the home row of keys 102. The ball 138 extends above and through the upper housing 101 at a height higher than any of the keys in either key bank 110 or 112.

Experimentation has shown that placing the ball 138 proximate to the home row of keys 102 minimizes movement of the hand away from the keys. Movement of the hand along a longitudinal path is more efficient than in a transverse path relative to a keyboard. Therefore, placing the ball 138 between the left key bank 110 and the right key bank 112 allows use of the ball 138 by only slight longitudinal movement of a typist's fingers from the home row. This location encourages use of the ball 138 with an index finger, and promotes a more neutral hand posture. Use of the ball 138 by the index finger has been shown to permit finer and more accurate cursor movement control. This location allows a typist to rest his hand on the keyboard and rotate the ball 138 with the index finger, this resting permitting (1) more accurate cursor movement control, and (2) means of supporting the dead weight of the arm. Furthermore, placing the ball 138 centrally between the left and the right key banks permits use of the ball by either the left or the right hand. For these reasons, this location of the ball 138 increases typist productivity.

Placing the ball 138 below the lower row 106 causes radial deviation as typists move their hands to use it. Additionally, it constrains the typists' upper extremities to a small work envelope, close to the body. Typists have more difficulty accessing the ball 138 if it is place above the upper row 108, and they are forced to remove their hands from the home row 102.

Positioning the ball 138 between the key banks further promotes blind orientation of the pointing device 138. Typists need not look down for the pointing device to locate it and appropriately place a finger on it. Additionally, the ball 138 projects above the keys in the home row 102 to further promote blind location and orientation of the pointing device 138.

The ball 138 preferably has a diameter of between 25 and 30 mm. A diameter of less than 25 mm has been shown to be uncomfortable to use and less task efficient. A diameter greater than 30 mm would be difficult to position between the left and right key banks 110 and 112 without altering the preferred angles discussed above.

The primary button 140 is positioned in front of the ball 138 and between the left and right key banks, extending forward between the left spacebar 114 and the right spacebar 116 (as shown in Figures 1 and 2). This position permits use of the primary button 140 with a thumb while the ball 138 is simultaneously rotated using an index finger. The secondary buttons 142 and 144 are preferably positioned side-by-side and between the trackball and the rear of the keyboard 100, between the left and right key banks 110 and 112. The primary button 140 is raised to a height slightly below that of the left and right spacebars 114 and 116 and the keybanks. The secondary buttons 142 and 144 are similarly raised to a height slightly below that of the keys in the adjacent key banks. The position of the buttons 140, 142 and 144 permits tactile location of the buttons, and activation while simultaneously rotating the ball 138. Additionally, the decreased height of buttons 140, 142 and 144 reduces the likelihood of accidental activation of these buttons while a typist is actuating the keys in the key banks. If the buttons 140, 142 and 144 were located higher than the keys in the keybanks, use of the ball 138 could be obstructed by these buttons.

The primary button 140 and the secondary buttons 142 and 144 preferably fill the area between the left key bank 110 and the right key bank 112. This further promotes blind operation of the pointing device 136 by providing a large surface area for each button. The particular uses to which the primary button 140 and the secondary buttons 142 and 144 are assigned may be determined by each software application.

The buttons 140, 142 and 144 are preferably connected to self-returnable, normally open button switches. However, any of these buttons may be connected to two position switches allowing for continuously on, or continuously off, positions.

A palm support 150 extends outwardly from, and along the entire front edge of the keyboard 100. The palm support 150 has an upper surface downwardly sloping from the rear to the front of the keyboard 100. The downwardly sloping shape of the palm support 150 reduces the height of the front edge of the keyboard 100. If typists rest their forearms, wrists or palms on the palm support 150, their hands are less upwardly bent than if their wrists/forearms were resting upon the work surface or front edge of the keyboard, thus minimizing the amount of hand plane extension.

The palm support 150 preferably has a width 152 between 24 and 28 cm, measured from the home row 102. A width of greater than 28 cm forces a typist too far away from the keyboard for comfortable typing. Additionally, a greater width may encourage typists to rest their arms on the palm support during active typing which may result in some of the above physical problems. The palm support 150 preferably provides a resting area for palms and wrists when a typist is not actively typing, to minimize static load fatigue to the upper limbs when holding the hands in a position above the keyboard.

A connecting port 154 on the bottom of the keyboard (shown in Figure 4) receives a connecting cord (not shown) for connecting the keyboard 100 to a computer. A trough 156 extends along the entire longitudinal dimension of the bottom of the keyboard 100, permitting the cord to extend from the port 154 to the host computer from either the left or right side of the keyboard. Retaining tabs 158 retain the cord in the selected left or right orientation.

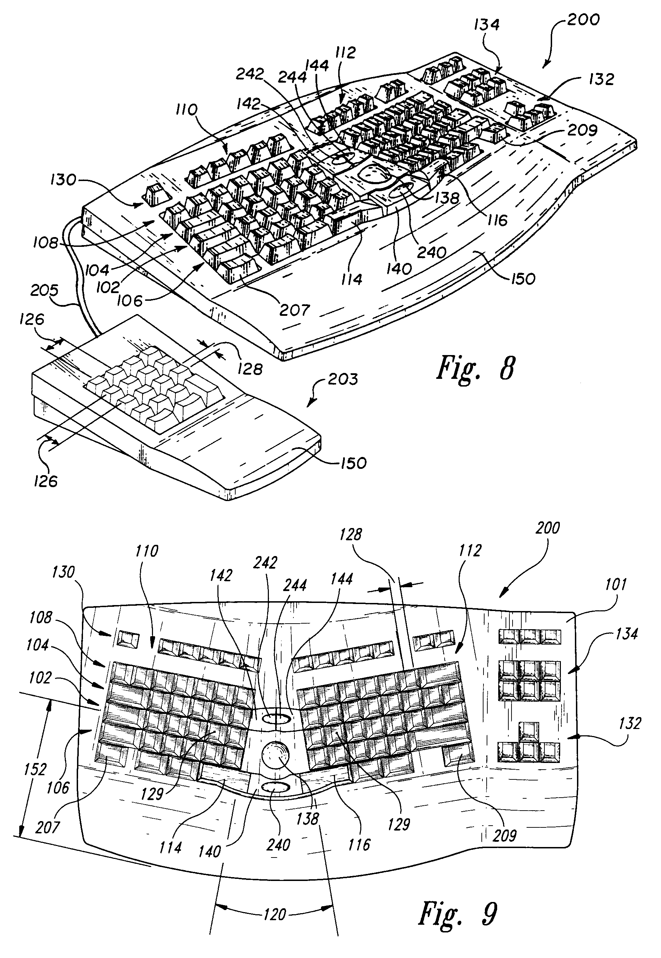

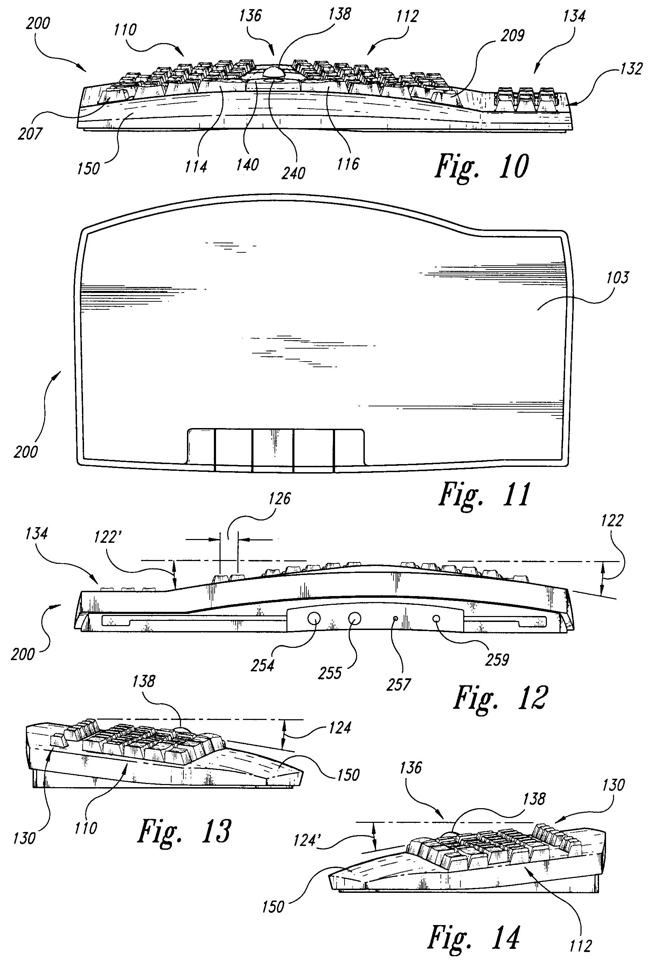

A first alternative embodiment according to the present invention is shown as a keyboard 200 In Figures 8-14. The keyboard 200, and all alternative embodiments described herein, are substantially similar to the keyboard 100 shown in Figures 1-7, and common elements will be identified by the same numbers. Only the differences in construction will be described in detail.

A separate numeric keypad 203 is connected to the keyboard 200 by means of a cable 205. The numeric keypad 203 may be positioned on the left or right sides of the keyboard 200. The keys in the keypad 203 are preferably arranged to include the standard 0-9 keys, with standard arithmetic function keys including"/", "*", "-", "+" and "Enter." The keys are arranged in a slight concave pattern, similar to that with the left and right key banks 110 and 112. The spacing, top contour, top size, travel, force and feedback are substantially similar for the keys of the keypad 203 as they are for the keyboard 200. A palm support extends outwardly from, and along the entire front edge of the numeric keypad 203, substantially similar to the palm support 150 on keyboard 100.

Although a separate numeric keypad is shown, a numeric keypad may be integrated into the keyboard 200, preferably to the right of the cursor movement keys 132 and the special keys 134.

The function row of keys 130 is split into left and right rows corresponding to the left and right key banks 110 and 112, respectively. The function row keys 130 are positioned proximate to and at the same split angle as the numeric row keys 108, providing easy access from the home row keys 102. The function keys 130 have key tops which are approximately one half the size of the key tops in the left and right key banks 110 and 112. The function row keys 130 are separated from the left and right key banks by a small distance, preferably within the range of 2.5-5 cm, measured from the center of a key in the numeric row 108 and its closest neighboring key in the row of function keys 130. The size of the function keys 130 and the separation of this row and the left and right key banks helps visually distinguish these function keys from the keys in the left and right key banks. The function keys 130 are in alignment with the vertical columns in their corresponding left and right key banks. This alignment allows typists to more easily reach the function keys 130.

The primary button 140 and secondary buttons 142 and 144 have upwardly protruding bumps 240, 242, and 244, respectively. These bumps extend above the top surface of the buttons to provide tactile feedback, allowing a typist to more easily locate buttons 140, 142, and 144 without having to look down for them. While the ball 138 preferably has a color similar to the color of the keys and housing of the keyboard 200, a differently colored ball 138 may be used to provide visual contrast, thus allowing users to visually locate the ball 138 more readily.

A left special function key 207 is located at the left, front-most corner of the left key bank 110. Similarly, the right special function key 209 is located at the right, front-most portion of the right key bank 112. These special keys may be assigned special functions depending upon a particular software application and are physically separated from the keys in the key banks to indicate such specialty. For example, these keys may be used for WINDOWS™ functionality in the WINDOWS™ operating system and software running on this system. Additionally, the special function keys 207 and 209 may be used in conjunction with the pointing device 136 to provide functions in addition to those provided by the buttons 240, 242 and 244.

As shown in Figure 12, four ports are provided at the rear of the keyboard 200: ports 254, 255, 257 and 259. These ports permit greater flexibility for the keyboard 200, to be configured by appropriate software. For example, keyboard commands could be output from port 254, while commands from the pointing device 136 are output from port 255. Additional commands may be output by port 259, and if necessary, power may be input though port 257. Alternatively, ports 257 and 259 may be used to input signals to the computer from other input devices such as the numeric keypad 203, a microphone or a camera by way of the keyboard 200.

Integrating the pointing device 136 into the keyboard eliminates the need for additional work surface area upon which to place a trackball or move a mouse. This space formerly occupied by a trackball or mouse, may now be occupied by the keypad 203.

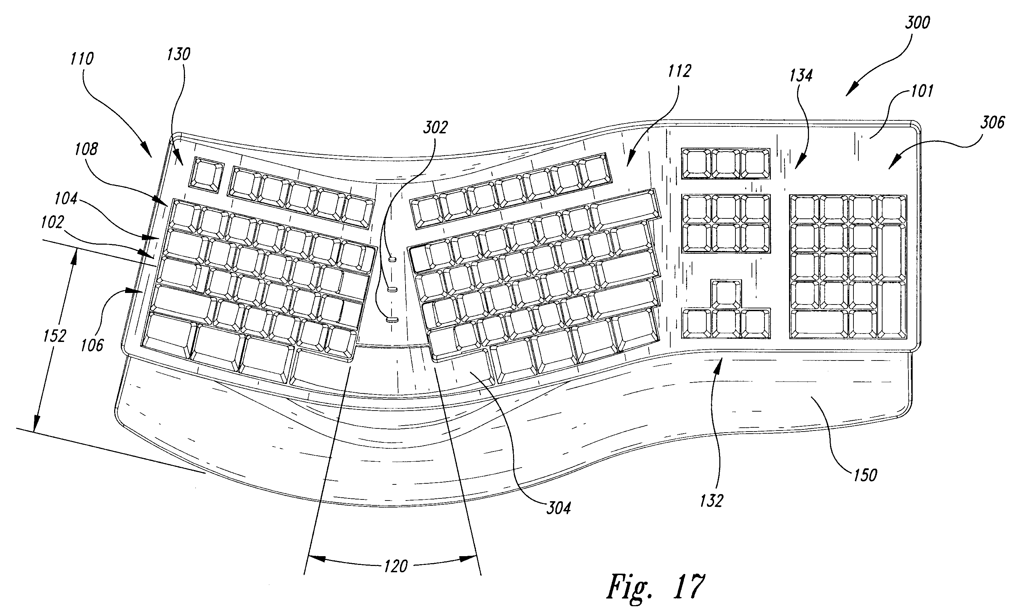

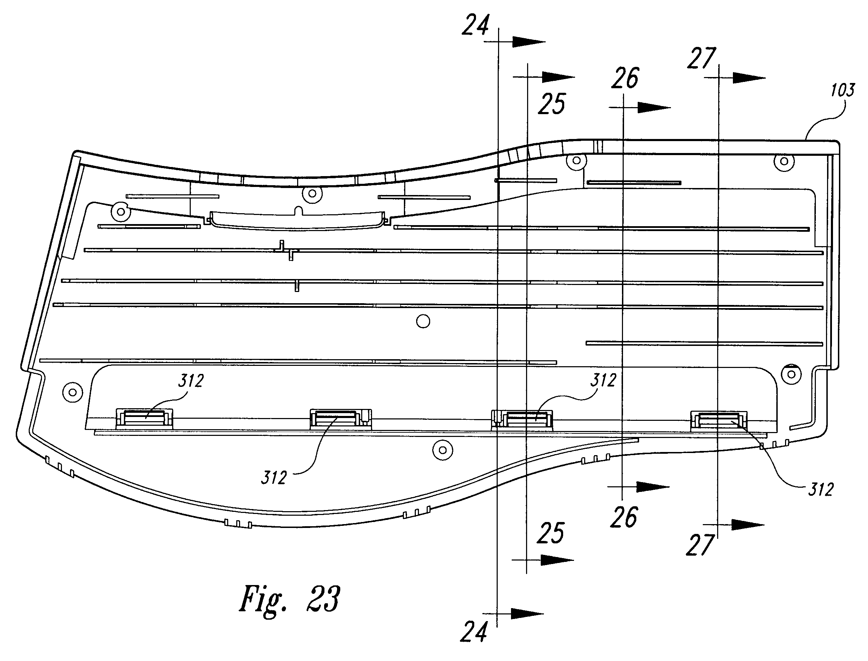

A second alternative embodiment according to the present invention is shown as a keyboard 300 in Figures 17 through 29. As shown in Figure 17, the pointing device within the wedge-shaped area in the previous embodiments is replaced in the second alternative embodiment by indicator lights 302. Indicator lights 302 are preferably light emitting diodes (LEDs) and may represent any computer functions known by those skilled in the art, e.g. capitals lock, scroll lock, numbers lock, etc. The split space bar in the previous embodiments is replaced by a single space bar 304 spanning the distance between the left and right key banks 110 and 112. An integrated keypad 306 is incorporated into the keyboard 300, to the right of the cursor movement keys 132 and special keys 134. The keys in the keypad 306 are preferably similar to those in the separate numeric keypad 203 described above.

The keys in the left and right keybanks 110 and 112 are staggered between rows, as is currently standard among most QWERTY keyboards. The function row keys 130 are positioned proximate to and at the same split angle as the numeric row keys 108, as in the keyboard 200. The function row keys 130 in keyboard 300 have substantially the same key tops as the keys in the left and right keybanks 110 and 112. Other than these differences described above, the keyboard 300 incorporates the same angles, geometries and key functionalities shown and described herein for the keyboards 100 and 200.

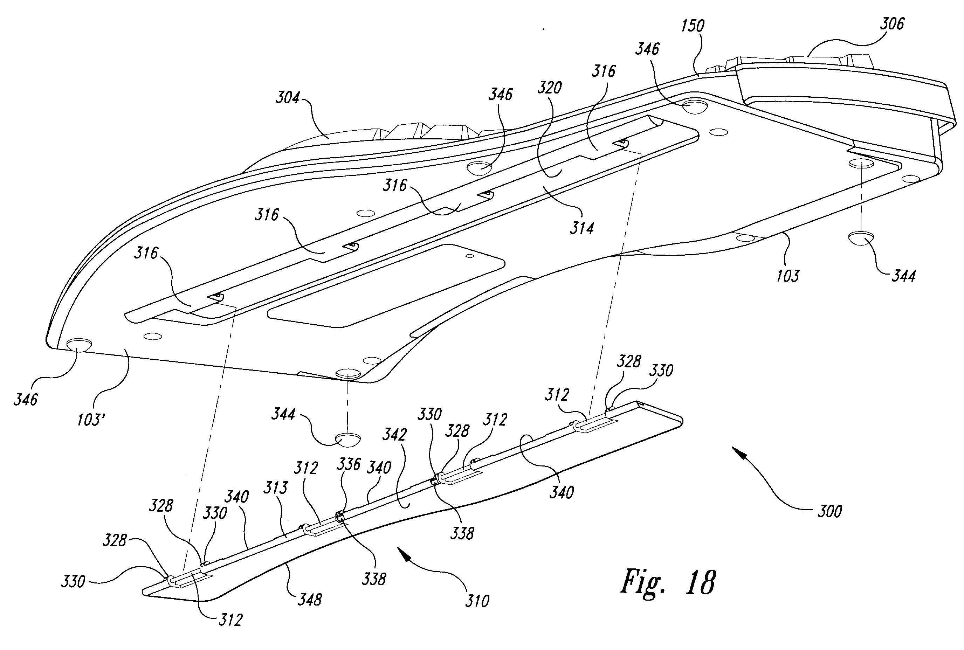

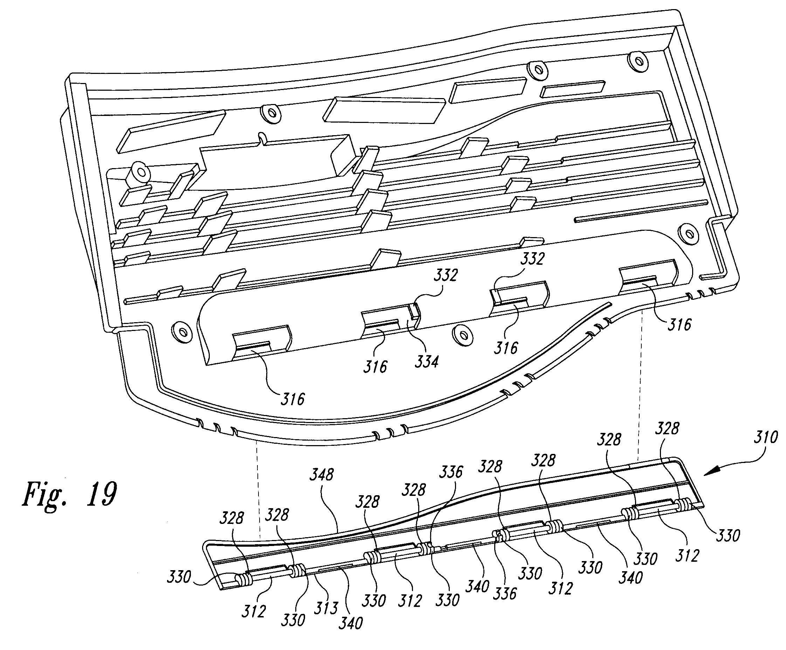

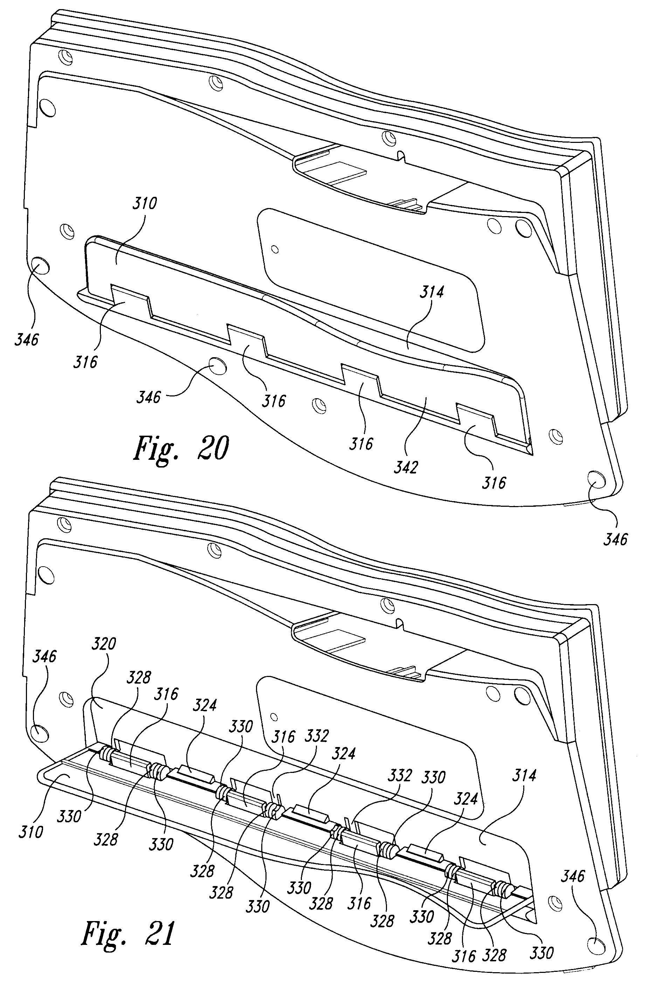

Referring to Figures 18 and 19, the keyboard 300 includes a tilting device that consists of an elongated support 310 pivotally retained in a downward opening elongated recess 314 in the bottom side 103' that extends between the left and right sides of the keyboard. The elongated support 310 may be pivoted downward, toward the front side of the keyboard 300 from a retracted position (as shown in Figure 20) to an extended position (as shown in Figure 21) to produce a declination angle that changes the front-to-back angle 124 and 124' of the keys to a neutral or negative angle, as discussed more fully below.

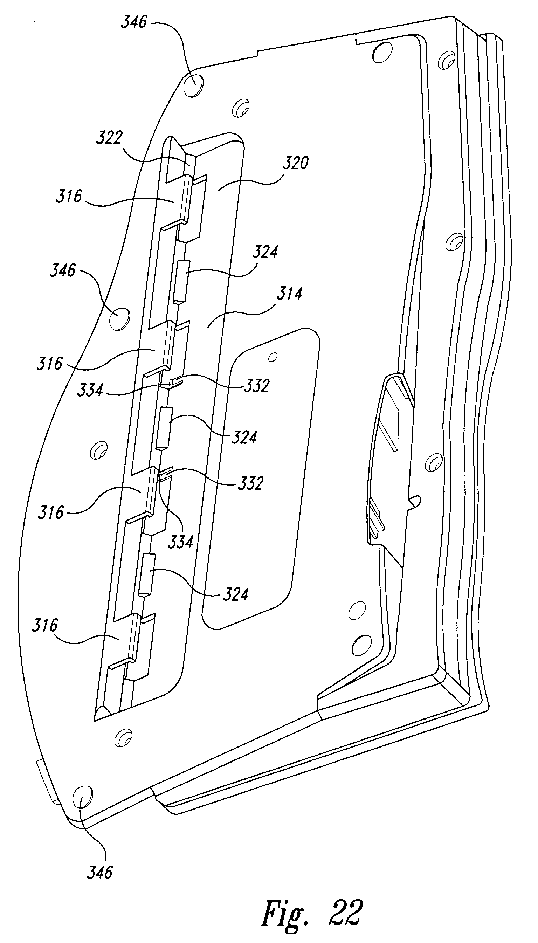

The elongated recess 314 is sized to receive the elongated support 310 in its retracted position. The elongated recess 314 is formed in the bottom side 103' proximate to the front side of the keyboard, approximately below the palm support 150. A bottom wall 320 and a front wall 322 (shown in Figure 22) define the elongated recess 314.

Four pivot rods 312 coaxially extend along a front edge 313 of the elongated support 310. Four hinge tabs 316 extending into the elongated recess 314 pivotally retain the four pivot rods 312 of the elongated support 310. Three stops 324 extend from the bottom wall 320, proximate to and spaced apart from the front wall 322, between the four hinge tabs 316. The hinge tabs 316, front wall 322, stops 324 and bottom wall 320 restrict downward, forward, rearward and upward movement, respectively, of the elongated support 310.

A pair of rod supports 328 retain each pivot rod 312 therebetween to the front edge 313 of the elongated support 310. A semicircular rotatable bearing 330 is positioned immediately adjacent each rod support 328 and projects toward and into engagement with the bottom wall 320 of the elongated recess 314. The bearing 330 provides a pivoting surface at the front edge 313 of the elongated support 310 on which the elongated support rotatably slides against the front wall 322 of the elongated recess 314 without undue friction.

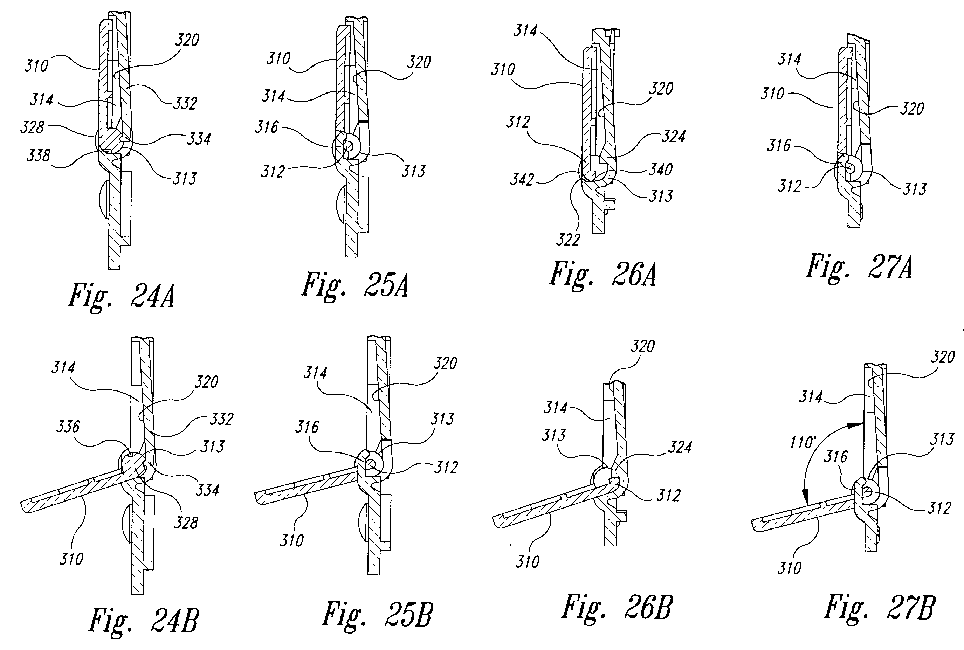

To retain the elongated support 310 in its retracted position, a pair of resilient retaining tabs 332 extends from the bottom wall 320 opposite two corresponding rotatable bearings 330. A retaining tooth 334 at a free end of each retaining tab 332 projects toward a corresponding one of the hinge tabs 316 (shown in Figures 19 and 22) to engage a notch 336 formed in the two rotatable bearings 330 that are positioned opposite the retaining tabs, when the elongated support 310 is in its retracted position (shown in Figure 24A). Additionally, the two outer pivot rods 312 are cam-shaped (shown in cross-section in Figures 27A and 27B) whereby a flattened surface of the outer rods 312 rests against an inner surface of the corresponding hinge tabs 316 when the elongated support 310 is in its retracted position. The elongated recess 314 is sized to receive the elongated support in its retracted position so that when the elongated support is so received, the elongated support is approximately parallel with the bottom side 103' of the keyboard 300, and the bottom side of the keyboard is approximately flat.

To retain the elongated support 310 in its extended position, a shelf 338 at the front edge 313 of the elongated support (shown in Figure 18) receives the retaining tooth 334 of the retaining tab 332 when the elongated support 310 is in its extended position (shown in Figure 24B). The two inner rods 312 are cam-shaped (shown in cross-section in Figures 25A and 25B) whereby a flattened surface of the inner rods rest against an inner surface of the corresponding hinge tabs 316 when the elongated support 310 is in its extended position. Additionally, the elongated support 310 pivots downwardly to form an opening angle greater than 90°, preferably about 100°, with respect to the bottom side 103' (shown in Figure 27B). To restrict the elongated support 310 to an opening angle greater than 100°, three flattened surfaces 340 at the front edge 313 of the elongated support 310 (shown in Figure 19) rest against the stops 324 (shown in Figure 26B). An outer surface 342 of the elongated support 310, proximate to the front edge 313 (shown in Figure 18), rests against the front wall 322 (shown in Figure 26B), further preventing the elongated support 310 from extending beyond an opening angle of 100°.

As shown in Figure 18, a pair of rearward resilient feet 344, secured at left and right sides of the bottom side 103' of the keyboard 300, proximate to the rear side, and three resilient forward feet 346 approximately equally spaced and secured to the bottom housing 103, proximate to the front side of the keyboard 300, extend from the lower side of the keyboard. The keyboard 300 rests on a work surface by means of the resilient feet 344 and 346 when the elongated support 310 is in its retracted position, providing the front-to-back inclination angles 124 and 124' as noted above.

When the elongated support 310 is moved into its extended position, the keyboard 300 rests on the rearward resilient feet 344 and a resting edge 348 of the elongated support 310 that is opposite the front edge 313. The rearward resilient feet 344 are preferably semi-spherical in shape to contact the work surface when the elongated support 310 is both extended and retracted. The resilient feet 344 and 346 are also preferably made of a resilient material having a high coefficient of friction to inhibit the keyboard 300 from sliding across the work surface when the keyboard is in use.

The resting edge 348 of the elongated support 310 has a shape curving upward along a midportion thereof to provide contact of the elongated support with the work surface along less than the entire length of the resting edge. As a result, only left and right outwardly extending portions of the resting edge 348 on either side of the curved midportion rest on the work surface, thus preventing the keyboard 300 from rocking on a less than completely flat work surface.

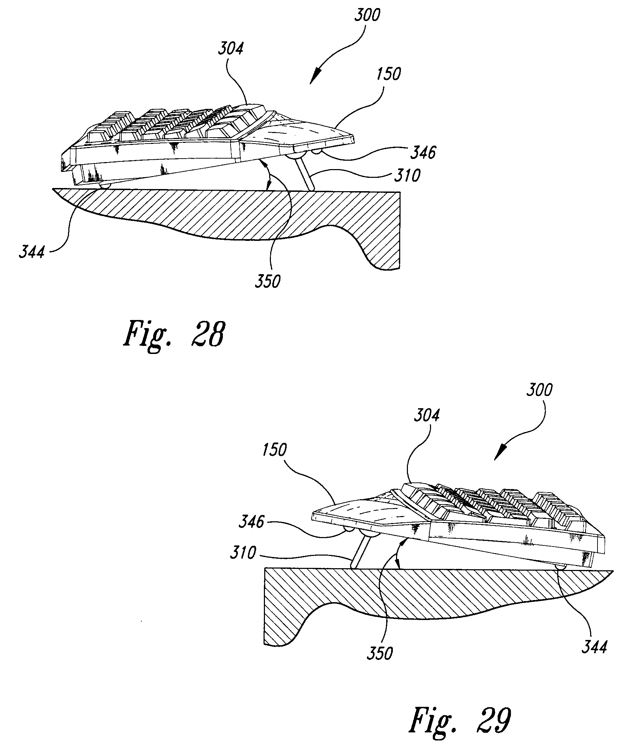

As shown in Figures 28 and 29, the bottom side 103' of the keyboard 300 forms a declination angle 350 with the work surface, whereby the keyboard declines away from a typist, causing the front-to-back inclination angles 124 and 124' of the left and right banks of keys 110 and 112 to have zero or negative values. Negative front-to-back inclination angles 124 and 124' reduce wrist or hand extension particularly caused by typists using the keyboard 300 on a low work surface. If the front-to-back inclination angles 124 and 124' are approximately 8°, then the declination angle 350 is preferably within a range of approximately 8° and 15°, resulting in total front-to-back inclination angles 124 and 124' of between approximately 0° and - 7°. A total front-to-back inclination angle greater than 0° reduces the ergonomic benefit of the declination angle 350, while a total front-to-back inclination angle of less than about -7° provides reduced stability and inhibits some typists from viewing the keys. Additionally, a total front-to-back inclination angle of less than about - 7° causes the front side of the keyboard 300 to face the typist to such a degree as to possibly create a psychological barrier that discourages typists from using the keyboard.

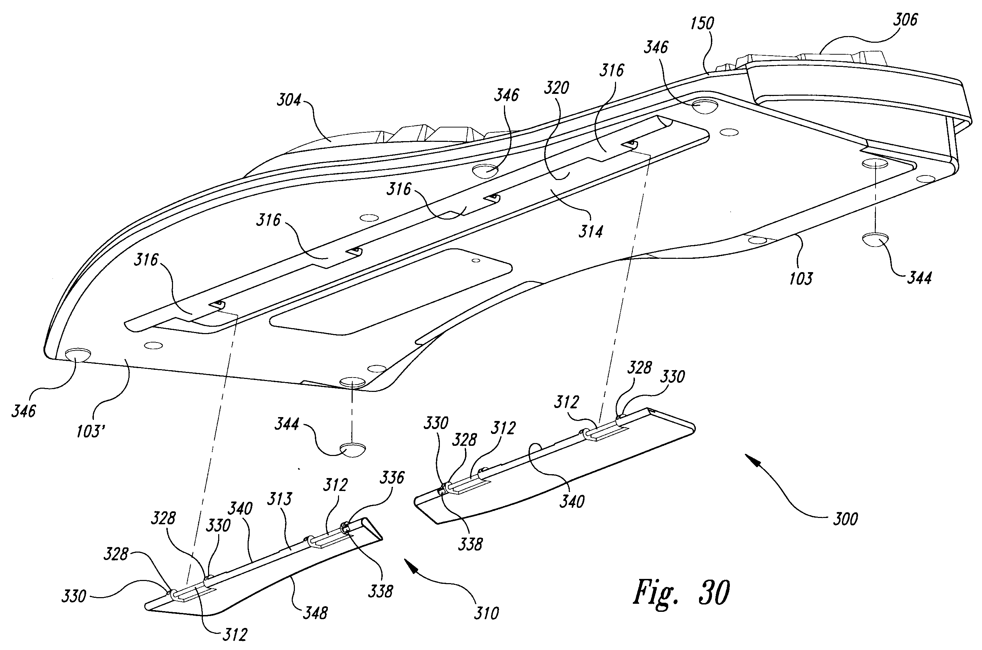

While the elongated support 310 is described above as being pivoted between only its retracted and extended positions, the keyboard 300 can be readily modified by those skilled in the art based on the detailed description provided herein to permit the elongated support to be adjustable to various opening angles therebetween, thus providing a range of declination angles 350. Sufficient frictional or other means to retain the elongated support 310 at various opening angles with respect to the bottom side 103' could be used to provide an infinitely adjustable elongated support 310. Additionally, while a single elongated support 310 is generally described herein, two separate supports can be pivotally retained proximate to the left and right sides of the keyboard 300, as shown in Figure 30.

Based on the above discussion, those skilled in the art will recognize that the present invention provides optimal geometries for a keyboard suitable to most typists, while avoiding the need for complicated or numerous adjustments. The human body, and therefore typists, have varying physical dimensions. A keyboard having adjustable geometries could be custom fit to each typist. However, it has been shown that typists prefer standard geometries rather than keyboards having complex adjustments. Typists will frequently "give up" before reaching their individual optimal configuration. Moreover, variable geometry keyboards have an increased likelihood of misuse by incorrectly configuring the keyboard and possibly increasing the risk of the above physical problems. Configuring a keyboard to each user is impractical, especially with shared workstations. Therefore, the present invention provides the optimal fixed geometry for most typists.

By eliminating the adjustable geometries, the keyboard of the present invention allows for an ergonomically optimal typing position, in a more relaxed, neutral posture, while maintaining the standard, traditional keyboard layout aesthetically acceptable in most business environments. By allowing a typist to adjust the front-to-back inclination angle, the keyboard of the present invention may be used on low height work surfaces.

Although specific embodiments of the invention have been described for purposes of illustration, various modifications may be made without departing from the spirit and scope of the invention, as will be known by those skilled in the art. Accordingly, the invention is not limited by the disclosure, but instead its scope is to be determined entirely by reference to the following claims.

## Claims

1. A keyboard for entering commands into a computer, the keyboard having left, right and front sides, the keyboard comprising:
a left key bank and a right key bank, the left and right key banks having keys arranged in a QWERTY layout, the left and right key banks separated by a key bank split angle within a range of 23° and 27° opening toward the front side of the keyboard, the key bank split angle forming a wedge-shaped area, the left key bank upwardly sloping at a first lateral slope angle from the left side of the keyboard, the right key bank upwardly sloping at a second lateral slope angle from the right side of the keyboard, the left and right key banks tilted toward the front side of the keyboard at a tilt angle within a range of 5° and 15°; and
a palm support extending outwardly from the front side of the keyboard.

2. A keyboard for entering commands into a computer, the keyboard having left, right and front sides, the keyboard comprising:
a left keybank and a right keybank, the left and right keybanks having keys having a QWERTY layout, the left and right keybanks separated by a keybank split angle within a range of 23° and 27° opening toward the front side of the keyboard, the keybank split angle forming a wedge-shaped area;
the left and right keybanks sloping downwardly toward the left and right sides of the keyboard, respectively, forming a lateral slope angle within a range of 8° and 10°;
the left and right keybanks tilted toward the front side of the keyboard at a tilt angle within a range of 5° and 15°;
the force per travel distance of each key defined by a double-peaked curve;
each key displaceable within a range of 2 and 5 mm;
each key capable of activation and where activation of a key provides auditory feedback; and
a palm support extending outwardly from the front side of the keyboard.

3. The keyboard according to claim 1 or 2 wherein the keys in the left bank are arranged in a concave pattern and the keys in the right key bank are arranged in a concave pattern.

4. The keyboard according to claim 1 or 2 wherein each key in the key banks has a key top, the key top having a concave contour, the concave contour having a concave radius within the range of 25 and 40 mm.

5. The keyboard according to claim 4 wherein the key top has a front edge and a rear edge, and wherein the rear edge is raised at a height higher than the height of the front edge.

6. The keyboard according to claim 1 or 2 wherein the keys can be activated by a force between 40 and 75 grams.

7. The keyboard according to claim 1 or 2 wherein each key is capable of activation and wherein activation of a key provides auditory feedback.

8. The keyboard according to claim 1 or 2 wherein the keys in the left key bank are arranged in columns, and the keys in the right key bank are arranged in columns.

9. The keyboard according to claim 1 or 2, further comprising an input device including a rotatable ball, the input device located between the left keybank and the right keybank, the rotatable ball extending upwardly from the wedge-shaped area.

10. The keyboard according to claim 9, further comprising an input button for use with the input device, the input button located proximate to the input device.

11. The keyboard according to claim 10 wherein the input button has an upwardly protruding bump.

12. The keyboard according to claim 9 wherein the left and right key banks comprise a home row of keys, an upper row of keys, and a lower row of keys and wherein the rotatable ball is located between the upper row of keys and the lower row of keys.

13. The keyboard according to claim 9 wherein the rotatable ball has a diameter within a range of 25 and 30 mm.

14. The keyboard according to claim 1 or 2 wherein the palm support has a width within the range of 20 to 28 cm, measured from the home row of keys.

15. The keyboard according to claim 1 or 2, further comprising at least one indicator light positioned at the wedge-shaped area.

16. A keyboard for entering commands into a computer, the keyboard having left, right and front sides and being capable of resting on a surface, the keyboard comprising:
a housing supporting a plurality of keys, the housing having a bottom side with front, rear, left, and right portions;
a left keybank and a right keybank, the left and right keybanks having keys arranged in a QWERTY layout, the left and right keybanks separated by a keybank split angle within a range of 23° and 27° opening toward the front portion, the keybank split angle forming a wedge-shaped area, the left keybank upwardly sloping at a first lateral slope angle from the left portion, the right keybank upwardly sloping at a second lateral slope angle from the right portion, the left and right keybanks tilted toward the front portion at a tilt angle within a range of 5° and 15°;
a palm support extending outwardly from the front portion; and
at least one supporting member retained by the housing at a position proximate to the front portion, the supporting member being selectively movable from a first position where the bottom side is approximate parallel to the surface when resting thereon, to a second position where the supporting member protrudes from the bottom side so that the keyboard declines away from a user at a declination angle sloping downward from the front portion to the rear portion when the keyboard rests on the surface.

17. A keyboard for entering commands into a computer or other device, the keyboard being capable of resting on a surface, the keyboard comprising:
a housing supporting a plurality of keys and having a bottom side, the bottom side having front and rear portions; and
at least one supporting member retained by the housing at a position proximate to the front portion, the supporting member movable from a first position where the bottom side is approximately parallel to the surface when resting thereon, to a second position where the supporting member protrudes from the bottom side so that the keyboard declines away from a user at a declination angle sloping downward from the front portion to the rear portion when the keyboard rests on the surface.

18. The keyboard of claim 16 or 17 wherein the supporting member is an elongated support having an elongated first edge, the elongated first edge being pivotally retained by the housing within an elongated, downward opening recess in the bottom side extending between the left and right portions.

19. The keyboard of claim 18 wherein the elongated recess is sized to substantially fully receive the elongated support therewithin when in the first position and not protrude from the elongated recess.

20. The keyboard of claim 16 or 17 wherein the declination angle between the bottom side and the surface is within a range of about 8° and 15°.

21. The keyboard of claim 16 or 17 wherein the supporting member includes left and right supporting members retained by the housing toward the left and right portions, respectively, proximate to the front portion.
